# EUROPEAN PATENT SPECIFICATION

(11) **EP 1 243 182 B1**
(45) Date of publication and mention of the grant of the patent: **02.08.2006**
(21) Application number: 02075828.0
(22) Date of filing: 04.03.2002
(51) Int. Cl.: A23G 1/00

(54) **Chocolate product**
Schokoladeprodukt
Produit du chocolat

(30) Priority: 22.03.2001 NL 1017666
(43) Date of publication of application: 25.09.2002
(73) Proprietor: Cake Art b.v., 8861 KV Harlingen (NL)
(72) Inventor: van der Heide, Sierk Laurentius Michael, 8861 ED Harlingen (NL)

(56) References cited:
- EP-A- 0 705 890
- EP-A- 0 739 957
- EP-A- 1 163 901
- WO-A-02/47488
- WO-A-97/41738
- US-A- 3 959 516
- DATABASE WPI Section Ch, Week 199837 Derwent Publications Ltd., London, GB; Class D13, AN 1998-430842 XP002236708 -& JP 10 179034 A (FUJI SEIYU KK), 7 July 1998 (1998-07-07)
- PATENT ABSTRACTS OF JAPAN vol. 1995, no. 11, 26 December 1995 (1995-12-26) -& JP 07 194305 A (TANIGUCHI:KK), 1 August 1995 (1995-08-01)

## Description

The invention relates to a method for the manufacturing of a pliable, strong, paperlike chocolate product, in which:
sugar is dissolved in water and is concentrated under continuous stirring until a temperature of 115 degrees Celsius is reached and:
   melted cocoa butter and/or comparable non-lauric fats are added;
   confectioner's sugar and mono and diglyceride of fatty acids are added;
   titanium dioxide, glycerine, monopropylene glycol and peanut oil are added;
   gelatine or a comparable gum product dissolved in water is added;
   if desired flavouring like vanilla is added;
   the substance is left to cool down to a high viscosity mixture;
   after which in a final processing stage the mixture is kneaded to pliable substance, while adding some treacle and cornflour or tapioca and by rolling it out at room temperature up to a thickness of 0,4-1,5 mm.

Chocolate products of this type are known as white chocolate. A disadvantage of white chocolate is that it is very difficult to put illustrations or texts onto it. An indirect method is known for putting an illustration onto white chocolate, according to which a mirror image of the illustration is put on a carrier, after which liquid white chocolate is poured out over the carrier. Thereby the white chocolate takes over the illustration. This known method is laborious and time-consuming. Sheeted chocolate products are known e.g. from US 3,959,516 and JP-7 194 305.

Onto the chocolate product obtained by the inventive method, illustrations can simply be put, for example in a silk-screen process. An additional advantage is that the product is easy to process, that it can be draped round a cake and that it is easy to cut shields from it or to fold flowers from it, which can be incorporated in pastries, cake, patisserie, sweet salads and other sweets. A further additional advantage is that the product can be stored at room temperature or in the refrigerator or in the freezer. The biggest advantage as compared to more or less comparable products, like Japanese rice paper, is that the inventive product is well chewable, that it melts away quickly in the mouth and that it tastes very well.

Moreover, the chocolate product is suitable for feeding it through a printer for accepting an illustration. A baker can print an illustration from a database or from a carrier brought in by a client directly onto the chocolate product and next incorporate the chocolate product on a cake. The printer should preferably be of a type that distributes small liquid drops over the product, a type well known in the art.

In a favourable realisation of the inventive method, which results in a product which is very stable and which can be processed very well, about 25% of cocoa butter and/or comparable non-lauric fats, 30% of sugar, 30% of confectioners sugar, 0,5% of admul (mono and diglyceride of fatty acids), 2% of titanium dioxide, 1% of gelatine or a comparable gum product and 4% of peanut oil are mixed, supplemented with water.

The chocolate product obtained by the inventive method may be provided in the shape of sheets, preferably placed between sheets of siliconised paper. Preferably, the sheets of chocolate product are packed individually or wrapped in packs of for example ten sheets in hermetically sealed foil. Packed in this manner, the storage life of the chocolate product is practically unlimited, while it can be used instantaneously. Preferably, the sheets are chosen such that they substantially have an A3 or A4 format, which means that they can be handled without any difficulty in a standard printer. Preferably, a sheet of chocolate product is fed into the printer together with a sheet of siliconised paper on which it was stored.

Instead of the shape of individual sheets, one may also supply the chocolate product in the shape of a roll on which a layer of the chocolate product is wound, preferably together with a sheet of siliconised paper.

The invention will now be further explained with a reference to an example in which about 25 Kg of chocolate product are produced. For that purpose, 7 Kg of cocoa butter are melted and heated to 50 degrees and separately 8 Kg of castormelis, a very fine sugar, are dissolved in 1 Kg of water and reduced to a temperature of 115 degrees Celsius. The reduction process preferably takes place in a closed, copper boiler, provided with a stirring apparatus. During the reduction process, no crystallisation should occur near the edge of the boiler of onto the stirring device. In order to prevent crystallisation, some glucose syrup or some citric acid may be added. As soon as the sugar has the proper density, the cocoa butter or other fats with comparable polymorfic properties are added while stirring continuously, together with 150 grams of admul (mono and diglyceride of fatty acids) mg 4203 (E 471), a fatty emugator well known in the art. Next, 8 Kg of confectioner's sugar are added, while stirring continuously.

In order to improve the colour of the mixture thus obtained, 530 grams of titanium dioxide are added and in order to improve the structure of the mixture, 200 grams of glycerine and 200 grams of monopropylene glycol are added, and moreover 1 Kg of peanut oil. Finally, 800 grams of gelatine are dissolved in 900 grams of water to a gel and added to the mixture. After complete blending, the product is poured out in trays, which have previously been powdered with cornflour, and is left to cool down. After about 10 hours, the product is cooled down and has become a highly viscous mixture with an unlimited shelf storage life.

The gelatine may be replaced, if desired, by comparable gum products, like karagagum or agar-agar.

On the day that the product must be processed further, the content of a tray is dumped into a kneading machine, preferably a so-called Z-kneader, well known in the art, and is kneaded until a pliable mass is obtained. Next, about 400 grams of treacle and about 400 grams of cornflour are added, as usual in the art. Next, the pliable mass is rolled-out. During this process prudence is called, in order to prevent the mass from becoming warm, because this would modify its crystal structure and it would irreversibly worsen the structure of the product. For industrial processing, preferably cooled rollers are used therefore, or the speed of the process is chosen so low that heating does not take place. The obtained rolled-out product is collected on for example siliconised paper and cut to size or rolled-up.

If there is a risk that during the future handling and processing of the product the sanitary conditions will be less favourable, one may if desired add a preservative, for example 30 grams of potassium sorbate (E202). In order to improve the taste for a certain group aimed at, flavourings may be added like vanilla or citric acid or essence of certain liqueurs.

## Claims

1. Method for the manufacturing of a pliable, strong, paperlike chocolate product, in which:
sugar is dissolved in water and is concentrated under continuous stirring until a temperature of 115 degrees Celsius is reached and:
melted cocoa butter and/or comparable non-lauric fats are added;
confectioner's sugar and mono and diglyceride of fatty acids are added;
titanium dioxide, glycerine, monopropylene glycol and peanut oil are added;
gelatine or a comparable gum product dissolved in water is added;
if desired flavouring like vanilla is added;
the substance is left to cool down to a high viscosity mixture;
after which in a final processing stage the mixture is kneaded to pliable substance, while adding some treacle and cornflour or tapioca and by rolling it out at room temperature up to a thickness of 0,4-1,5 mm.

2. Method according to claim 1, **characterised in that** about 25% of cocoa butter and/or comparable non-lauric fats, 30% of sugar, 30% of confectioners sugar, 0,5% of mono and diglyceride of fatty acids, 2% of titanium dioxide, 1% of gelatine or a comparable gum product and 4% of peanut oil are mixed, supplemented with water.

3. Roll on which a layer of the chocolate product according to claim 1 or 2 is wound.

4. Sheets of the chocolate product according to claim 1 or 2, having an A3 or A4 format.

## Patentansprüche

1. Verfahren zur Herstellung eines biegsamen, starken, papierähnlichen Schokoladenprodukts, wobei:
Zucker in Wasser aufgelöst und unter ständigem Rühren eingedickt wird, bis eine Temperatur von 115 Grad Celsius erreicht worden ist und:
geschmolzene Kakaobutter und/oder vergleichbare "Non-lauric"-Fette hinzugefügt werden;
Konditor-Pulverzucker und Mono- und Diglyceride von Fettsäuren hinzugefügt werden;
Titandioxid, Glycerin, Monopropylenglycol und Arachidöl hinzugefügt werden;
Gelatine oder ein vergleichbares, in Wasser aufgelöstes Bindemittel hinzugefügt wird;
auf Wunsch ein Geschmackstoff wie zum Beispiel Vanille hinzugefügt wird;
wobei man anschließend die Substanz zu einem hochviskosen Gemisch abkühlen lässt;
wonach das Gemisch während einer abschließenden Verarbeitung durch Kneten, unter Hinzufügung von ein wenig weißem Sirup und Speisestärke oder Tapioka biegsam gemacht und anschließend bei Zimmertemperatur bis zu einer Dicke von 0,4 - 1,5 mm ausgerollt oder ausgewalzt wird.

2. Verfahren gemäß Anspruch 1, **dadurch gekennzeichnet, dass** ungefähr 25% Kakaobutter und/oder vergleichbare "Non-lauric"-Fette, 30% Zucker, 30% Konditor-Pulverzucker, 0,5% Mono- und Diglyceride von Fettsäuren, 2% Titandioxid, 1% Gelatine oder ein vergleichbares Bindemittel und 4% Arachidöl gemischt werden, aufgefüllt mit Wasser.

3. Rolle, auf der eine Schicht eines Schokoladenprodukts gemäß den Ansprüchen 1 oder 2 gewickelt worden ist.

4. Blatt eines Schokoladenprodukts gemäß den Ansprüchen 1 oder 2, in A3- oder A4-Format.

## Revendications

1. Un procédé pour fabriquer un pliable, robuste, papiereux produit de chocolat, dans lequel:
du sucre s'est dissout dans l'eau et est concentré en remuant continu jusqu'a une temperature de 115 degrés Celsius est atteint et:
beurre de cacao fondu et/ou graisses comparable d'un type non-lauric est ajoutés;
sucre pour confiserie et mono et diglycerides des acides grasses sont ajoutés;
dioxide de titane, glycérine, monopropylène glycol et huile de cacahuète sont ajouté;
gélatine ou un produit de gomme comparable, dissout dans l'eau est ajouté;
sur demande un aromisant comme vanille est ajouté;
la substance est laisser pour se refroidir pour obtenir une mixture a grand viscosité;
après quoi dans un dernier étape du procédé la mélange est travaillée pour obtenir une substance pliable, en ajoutant un peu de mélasse et maïzena ou tapioca et en étendant la mélange à une température de chambre jusqu'à une épaisseur de 0,4-1,5 mm.

2. Un procédé tel que revendiqué à la revendication 1, **caractérisé en ce que** approximativement 25% du beurre de cacao et/ou graisses comparable d'un type non-lauric, 30% du sucre, 30% du sucre pour confiserie, 0,5% du mono et diglycerides des acides grasses, 2% du dioxide de titane, 1% du gélatine ou un produit de gomme comparable et 4% du huile de cacahuète sont mélangés, complétés avec d'eau.

3. Rouleau sur lequel une couche d'un produit de chocolat tel que revendiqué à la revendication 1 ou 2 est enroulé.

4. Feuille d'un produit de chocolat tel que revendiqué à la revendication 1 ou 2, d'un format A3 ou A4.
